(19) Europäisches Patentamt
European Patent Office
Office européen des brevets

(11) Publication number: **0 435 649 A1**

(12) **EUROPEAN PATENT APPLICATION**

(21) Application number: **90314250.3**

(22) Date of filing: **24.12.90**

(51) Int. Cl.5: **C08L 59/02**, C08K 5/00, C08K 5/13, C08K 5/09, C08K 3/22, C08K 3/24

(30) Priority: **28.12.89 JP 342384/89**

(43) Date of publication of application: **03.07.91 Bulletin 91/27**

(84) Designated Contracting States: **AT BE CH DE DK ES FR GB GR IT LI LU NL SE**

(71) Applicant: **POLYPLASTICS CO. LTD.**
**3-13, Azuchicho, 2-chome**
**Chuo-Ku Osaka-shi Osaka(JP)**

(72) Inventor: **Sugiyama, Noriyuki**
**2452-1 Takamatsu**
**Shizuoka-shi, Shizuoka(JP)**

(74) Representative: **Jackson, Peter et al**
**HYDE, HEIDE & O'DONNELL 10-12 Priests Bridge**
**London SW15 5JE(GB)**

(54) **Polyoxymethylene composition.**

(57) A polyoxymethylene resin composition having improved thermal stability is provided by a composition containing, based on the weight of the polyoxymethylene, 0.01 to 5% by weight of a hindered phenol antioxidant and 0.01 to 5% by weight of an amine polymer having a molecular weight of at least 1000 and comprising structural units of the following formula (1):

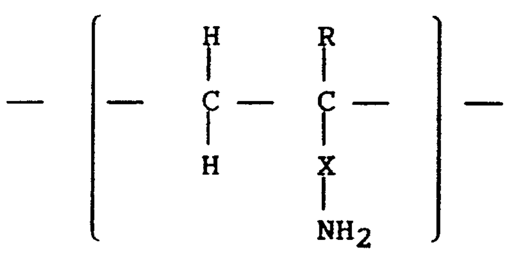

(1)

wherein R represents a hydrogen atom, an alkyl group, a phenyl group, an alkyl-substituted phenyl group or

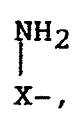

and X represents an alkylene group, a carbonyl group, a carboxyalkylene group, an alkyleneoxycarbonylalkyl group, a phenylene group, an alkyl-substituted phenylene group, an amido group or an alkyleneamido group, or X may be null in some cases.

EP 0 435 649 A1

## POLYOXYMETHYLENE COMPOSITION

The present invention relates to a polyoxymethylene composition which exhibits improved mold release properties and improved thermal stability during molding (thereby minimising the release of free formaldehyde to the ambient environment).

Polyoxymethylene is a well known engineering resin produced by polymerizing formaldehyde or trioxane (which is a cyclic oligomer of formaldehyde) or by copolymerizing trioxane with a comonomer such as a cyclic ether or cyclic formal. The terminals thereof are typically stabilized (e.g. by hydrolysis) to inhibit depolymerisation of the polyoxymethylene chain. Antioxidants and other thermal stabilizers have been blended with polyoxymethylene molding compositions so as to improve further their thermal stability characteristics.

Sterically hindered phenol compounds and sterically hindered amine compounds are known antioxidants that have been incorporated into polyoxymethylene molding compositions hitherto. In addition, other thermal stabilizers that have been blended with polyoxymethylene resins include polyamides, urea derivatives, amidine compounds, alkali metal hydroxides, alkaline earth metal hydroxides, and organic and inorganic acid salts.

However, polyoxymethylene resin compositions which include such known antioxidants and/or thermal stabilizers may still undergo some depolymerization during molding, due to the elevated temperatures employed, and thereby emit free formaldehyde as a by-product. Such release of free formaldehyde into the ambient workplace is to be avoided.

Another disadvantage with the above additives is that when molding is conducted over a long period, a fine powder or tarry substance (MD) is deposited on the inner surface of the mold and impairs the appearance of the obtained molding. Although various ideas and proposals were heretofore made, satisfactory results could not always be obtained.

After intensive investigations of stabilizers, the inventors have found that the intended object can be attained by incorporating a specified amine polymer along with an antioxidant. The present invention has been completed on the basis of this finding.

Thus the present invention relates to a polyoxymethylene composition containing 0.01 to 5% by weight, based on the polyoxymethylene, of a hindered phenol antioxidant and 0.01 to 5% by weight of an amine polymer having a molecular weight of at least 1000 and comprising structural units of the following formula (1):

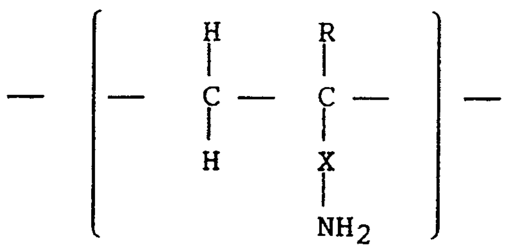 (1)

wherein R represents a hydrogen atom, an alkyl group, a phenyl group, an alkyl-substituted phenyl group or

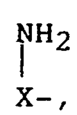

and X represents an alkylene group, a carbonyl group, a carboxyalkylene group, an alkyleneoxycarbonylalkyl group, a phenylene group, an alkyl-substituted phenylene group, an amido group or an alkyleneamido group, or X may be null in some cases.

The amine polymer used in the present invention is any of those comprising the structural units of the above formula (1) and having a molecular weight of at least 1000. Preferred are homopolymers, crosslinked polymers or copolymers having a molecular weight of at least 1000 and comprising allylamine, acrylamide, acrylic hydrazide, methacrylic hydrazide, an aminoalkyl acrylate, an aminoalkyl methacrylate or a vinylalkylamine, or a copolymer thereof with ethylene, propylene, butylene, butadiene, styrene, acrylonitrile, an acrylic ester or a methacrylic ester. These amine polymers may be used either singly or in a combination of two or more of them.

The molecular weight of the amine polymer used is at least 1000, preferably at least 5000 and most preferably 10000 to 100000. When the molecular weight is less than 1000, the polymer oozes out of the composition or the molding produced therefrom, so that an intended effect of the present application cannot be obtained.

Among these amine polymers, preferred are homopolymers, cross linked polymers and copolymers comprising allylamine or acrylamide as the structural units and having a molecular weight of at least 1000.

When the amine polymer is used in combination with the hindered phenol antioxidant, it exhibits effects of inhibiting the decomposition of the polyoxymethylene and capturing formaldehyde formed by the decomposition. Therefore the formation of decomposition gas is considerably inhibited. Moreover, deposits are scarcely formed in the mold, which appears to be because the amine polymer per se is scarcely sublimed or decomposed.

The hindered phenol antioxidants used in the present invention include
2,2'-methylenebis(4-methyl-6-t-butylphenol),
1,6-hexanediol bis[3-(3,5-di-t-butyl-4-hydroxyphenyl)-propionate],
pentaerythritol tetrakis[3-(3,5-di-t-butyl-4-hydroxyphenyl)-propionate],
triethylene glycol bis[3-t-butyl-5-methyl-4-hydroxyphenyl)-propionate],
1,3,5-trimethyl-2,4,6-tris(3,5-di-t-butyl-4-hydroxybenzyl)-benzene,
n-octadecyl 3-(4'-hydroxy-3',5'-di-t-butylphenyl)propionate, 4,4'-methylenebis(2,6-di-t-butylphenol),
4,4'-butylidenebis(6-t-butyl-3-methylphenol),
2,2'-thiodiethylbis[3,5-di-t-butyl-4-hydroxyphenyl)-propionate],
di-stearyl 3,5-di-t-butyl-4-hydroxybenzylphosphonate,
2-t-butyl-6-(3-t-butyl-5-methyl-2-hydroxybenzyl)-4-methyl-phenyl acrylate and
N,N'-hexamethylenebis(3,5-di-t-butyl-4-hydroxyhydrocinnamide)

They may be used either singly or in combination of two or more of them. Among them, particularly preferred are 1,6-hexanediol bis[3-(3,5-di-t-butyl-4-hydroxyphenyl)-propionate],
pentaerythritol tetrakis[3-(3,5-di-t-butyl-4-hydroxyphenyl)-propionate],
triethylene glycol bis[3-t-butyl-5-methyl-4-hydroxyphenyl)-propionate], and
N,N'-hexamethylenebis(3,5-di-t-butyl-4-hydroxyhydrocinnamide)

The amount of the hindered phenol antioxidant used in the present invention is 0.01 to 5% by weight, preferably 0.1 to 3% by weight, based on the polyoxymethylene, and the amount of the amine polymer is 0.01 to 5% by weight, preferably 0.01 to 1% by weight. If smaller amounts are employed, no sufficient effects can be obtained, while if larger amounts are employed, the heat stabilizing effect reaches saturation and undesirable discoloration occurs.

The polyoxymethylenes into which the above-described additives are to be incorporated are polymeric compounds comprising oxymethylene groups ($-CH_2O-$) as the main constituent units. They may be any of polyoxymethylene homopolymers, and copolymers, terpolymers and block copolymers comprising the oxymethylene groups and a small amount of other constituent units. The molecules of the polyoxymethylene may be not only linear but also branched or crosslinked. The degree of polymerization thereof is not particularly limited.

The composition of the present invention may contain, if necessary, one or more compounds selected from among a nitrogeneous compound other than the amine polymer of the present application, an alkali or alkaline earth metal hydroxide, an inorganic acid salt, and a metallic compound such as a carboxylate or alkoxide.

The nitrogeneous compounds herein include polyamides such as homopolymeric and copolymeric polyamides, e.g. nylon 12, nylon 6.10 and nylon 6.66.610, substituted polyamides having a methylol group or the like, nylon salts, polyesteramides synthesized from a combination of caprolactone and caprolactam; as well as polyaminotriazoles, heat condensation products synthesized from dicarboxylic dihydrazide and urea by heating, nitrogen-containing polycondensates synthesized from urea and a diamine, heat condensation products of urea synthesized by heating urea, uracils, cyanoguanidines, dicyandiamide, guanamine (2,4-diamino-sym-triazine), melamine (2,4,6-triamino-sym-triazine), N-butylmelamine, N-phenylmelamine, N,N-diphenylmelamine, N,N-diallyl-melamine, N,N',N''-triphenylmelamine, N,N',N'-trimethylolmelamine, benzoguanamine (2,4-diamino-6-phenyl-sym-triazine), 2,4-diamino-6-methyl-sym-triazine, 2,4-diamino-6-butyl-sym-triazine, 2,4-diamino-6-benzyloxy-sym-triazine, 2,4-diamino-6-butoxy-sym-triazine, 2,4-diamino-6-cyclohexyl-sym-triazine, 2,4-diamino-6-chloro-sym-triazine, 2,4-diamino-6-mercapto-sym-triazine, 2,4-dihydroxy-6-amino-sym-triazine (ammelide), 2-hydroxy-4,6-diamino-sym-triazine (ammeline) and N,N,N',N'-tetracyanoethylbenzoguanamine.

The metallic compounds include hydroxides of sodium, potassium, magnesium, calcium and barium, carbonates, phosphates, silicates, borates, oxalates, malonates, succinates, adipates, and salts of higher ($C_{10}$ to $C_{32}$) fatty acids such as stearic acid and substituted higher fatty acids having a substituent such as a hydroxyl group. They further include basic compounds having at least one tertiary nitrogen atom and a metal carboxylate group in one molecule such as sodium N-methyliminodiacetate, trisodium nitrilotriacetate, tetrasodium ethylenediaminetetraacetate, tetrapotassium ethylenediaminetetraacetate, dicalcium ethylenediaminetetraacetate, pentasodium diethylenetriaminepentaacetate, pentapotassium diethylenetriaminepentaacetate, hexasodium triethylenetetraminehexaacetate and tetrasodium ethylenedioxybis(ethylamine)-N,N,N',N'-tetraacetate.

The composition of the present invention may contain one or more of known additives such as lubricants, nucleating agents, releasing agents, antistatic agents, surfactants, organic polymeric materials, and inorganic or organic, fibrous, powdery or platy fillers in order to impart desired properties thereto depending on the required duty.

The process for producing the compositions of the present invention is not particularly limited. They can easily be produced with a known apparatus and by a known process for the production of ordinary resin compositions. For example, they can be produced by (i) a process wherein the components are mixed together, the mixture is kneaded and extruded with an extruder to form pellets and the pellets are shaped into a molding, (ii) a process wherein two or more kinds of pellets having defferent compositions from each other are produced, and predetermined amounts of the pellets are mixed together and subjected to the molding to obtain a molding having an intended composition or (iii) a process wherein one or more components are directly placed in a molding machine. It is also preferred that a part of the resin components is finely pulverized and then mixed with other components in order to obtain a homogeneous mixture.

The resin composition of the present invention can be produced by any of extrusion molding, injection molding, compression molding, vacuum molding, blow molding and foam molding processes.

The following non-limiting Examples further illustrate the present invention. In these Examples, the evaluation methods were as follows:

1) Moldability: A sample of the polyoxymethylene composition was continuously molded (for about 24 h) with an injection molding machine under predetermined conditions and the following tests were conducted:

(1) Formaldehyde smell in the molding step: Twenty moldings (about 30 mm x about 5 mm x about 1.5 mm) were placed immediately after production in a zippered polyethylene bag (size: 100 mm x 140 mm) and sealed. After a predetermined period of time, the bag was opened and the odour released was classified into four ranks:

A: no irritating smell,
B: a faint smell of formaldehyde,
C: a relatively strong smell of formaldehyde, and
D: a strong smell of formaldehyde.

(2) Quantity of deposit in the mold:
The extent of staining of the mold after the continuous molding was classified into five ranks:

A: no staining,
B: very slight staining,
C: a little staining,
D: relatively severe staining, and
E: severe staining.

2) Weight loss upon heating:
The weight loss caused when 5g of the sample was heated at 235 °C in air for 45 min was determined.

Examples 1 to 7

A hindered phenol antioxidant and an amine polymer as listed in Table 1 were added to a polyoxymethylene copolymer (Duracon, a product of Polyplastics Co Ltd) in a ratio as specified in Table 1, mixed and extruded with an extruder to form a pelletized composition. The pellets were subjected to the above-described tests. The results are given in Table 1.

Comparative Examples 1 to 5

Pellets were produced in the same manner as that of Examples 1 to 7 except that the amine compound was replaced with 0.3% by weight of a substance listed in Table 1. The results are given in Table 1 together with those of the Examples.

It will be apparent from the above description and Examples that according to the present invention, the thermal stability of the polyoxymethylene is remarkably improved. The invention also provides a resin composition which is advantageous from the viewpoint of the working (hygienic) environment, which stains the molds only slightly even after continuous molding over a long period of time and which emits a considerably weakened smell of formaldehyde in the molding process.

Table 1

| | | Composition | | | Quality | | |
|---|---|---|---|---|---|---|---|
| | | | | | moldability | | |
| | | hindered phenol antioxidant (wt.%) | amine polymer *3 (wt.%) | others (wt.%) | smell of formaldehyde | amount of deposit in the mold | weight loss upon heating (ppm/min) |
| Ex. No. | 1 | a *1 (0.3) | polyallylamine 1 (0.1) | — | A | A | 65 |
| | 2 | a ( " ) | " " (0.3) | — | A | A | 60 |
| | 3 | a ( " ) | " " (0.5) | — | A | A | 60 |
| | 4 | a (0.5) | " " (0.3) | — | A | A | 60 |
| | 5 | a (0.3) | polyallylamine 2 (0.3) | — | A | A | 60 |
| | 6 | a (0.3) | acrylamine/styrene copolymer (80/20) (0.3) | — | A | A | 60 |
| | 7 | b *2 (0.3) | polyallylamine 1 (0.3) | — | A | A | 60 |
| Comp. Ex. No. | 1 | a (0.3) | — | Ca stearate (0.3) | D | B | 145 |
| | 2 | a (0.3) | — | melamine (0.3) | B | C | 80 |
| | 3 | a (0.3) | — | polyamide (0.3) | C | C | 100 |
| | 4 | a (0.3) | — | cyanoguanidine (0.3) | D | E | 300 |
| | 5 | a (0.3) | — | " (0.3) | D | E | 340 |

*1 a: triethylene glycol bis[3-(3-t-butyl-5-methyl-4-hydroxyphenyl)propionate]

*2 b: pentaerythritol tetrakis[3-(3,5-di-t-butyl-4-hydroxyphenyl)propionate]

*3 c: molecular weight of polyallylamine 1: 10000, molecular weight of polyallylamine 2: 80000.

## Claims

1. A polyoxymethylene composition containing 0.01 to 5% by weight, based on the polyoxymethylene, of a hindered phenol antioxidant and 0.01 to 5% by weight, based on the polyoxymethylene, of an amine

polymer having a molecular weight of at least 1000 and comprising structural units of the following formula (1):

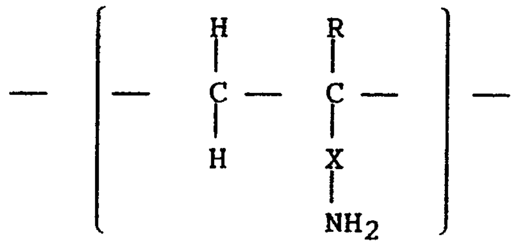

(1)

wherein R represents a hydrogen atom, an alkyl group, a phenyl group, an alkyl-substituted phenyl group or

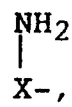

and X represents an alkylene group, a carbonyl group, a carboxyalkylene group, an alkyleneoxycarbonylalkyl group, a phenylene group, an alkyl-substituted phenylene group, an amido group or an alkyleneamido group, or X may be null in some cases.

2. A polyoxymethylene composition according to claim 1, wherein the hindered phenol antioxidant is selected from one or more of
1,6-hexanediol bis[3-(3,5-di-t-butyl-4-hydroxyphenyl)-propionate],
pentaerythritol tetrakis[3-(3,5-di-t-butyl-4-hydroxyphenyl)-propionate],
triethylene glycol bis[3-t-butyl-5-methyl-4-hydroxyphenyl)-propionate], and
N,N'-hexamethylenebis(3,5-di-t-butyl-4-hydroxyhydrocinnamide).

3. A polyoxymethylene composition according to claim 1 or claim 2, wherein the amount of the hindered phenol is 0.1 to 3% by weight, based on the polyoxymethylene.

4. A polyoxymethylene composition according to any one of claims 1 to 3, wherein the amine polymer is one or more polymers selected from among allylamine homopolymers, crosslinked polymers and copolymers.

5. A polyoxymethylene composition according to any one of claims 1 to 3, wherein the amine polymer is one or more polymers selected from among acrylamide homopolymers, crosslinked polymers and copolymers.

6. A polyoxymethylene composition according to any preceding claim, wherein the molecular weight of the amine polymer used is at least 5000.

7. A polyoxymethylene composition according to claim 6, wherein the molecular weight of the amine polymer used is in the range 10000 to 100000.

8. A polyoxymethylene composition according to any preceding claim, wherein the amount of the amine polymer is 0.01 to 1% by weight, based on the polyoxymethylene.

9. A polyoxymethylene composition according to any preceding claim, which further contains one or more compounds selected from among a nitrogeneous compound (other than the said amine polymer), an alkali or alkaline earth metal hydroxide, an inorganic acid salt, and a metallic compound such as a carboxylate or alkoxide.

European Patent Office

# EUROPEAN SEARCH REPORT

Application Number

EP 90314250.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP - A2 - 0 289 142 (HOECHST CELANESE CORPORATION) * Claims; page 4, lines 23-25 * -- | 1-3,9 | C 08 L 59/02<br>C 08 K 5/00<br>C 08 K 5/13<br>C 08 K 5/09<br>C 08 K 3/22<br>C 08 K 3/24 |
| A | EP - A2 - 0 333 660 (CIBA-GEIGY AG) * Claims * -- | 1-3,9 | |
| A | EP - A1 - 0 270 279 (CELANESE ENGINEERING RESINS, INC.) * Claims * ---- | 1 | |
| | | | TECHNICAL FIELDS SEARCHED (Int. Cl.5) |
| | | | C 08 L 59/00<br>C 08 K |

The present search report has been drawn up for all claims

| Place of search | Date of completion of the search | Examiner |
|---|---|---|
| VIENNA | 22-03-1991 | WEIGERSTORFER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)